# EUROPÄISCHE PATENTSCHRIFT

(11) **EP 1 342 617 B1**
(45) Veröffentlichungstag und Bekanntmachung des Hinweises auf die Patenterteilung: **12.12.2007**
(21) Anmeldenummer: 03004393.9
(22) Anmeldetag: 03.03.2003
(51) Int. Cl.: B60Q 1/00

(54) **Scheinwerferanordnung für Fahrzeuge mit einer Hauptlichtquelle und einem Fahrtrichtungsanzeiger**
Headlamp assembly for vehicle with a main light source and a direction indicator
Ensemble de phare pour véhicule avec une source de lumière principale et un indicateur de changement de direction

(30) Priorität: 05.03.2002 DE 10209588
(43) Veröffentlichungstag der Anmeldung: 10.09.2003
(73) Patentinhaber: Volkswagen Aktiengesellschaft, 38436 Wolfsburg (DE)
(72) Erfinder: Mössner, Malte, 38100 Braunschweig (DE); Werner, Michael, 38106 Braunschweig (DE)
(74) Vertreter: Rabe, Andreas

(56) Entgegenhaltungen:
- EP-A- 0 921 034
- EP-A- 0 969 245
- DE-A1- 19 933 766
- DE-C1- 4 229 728

## Beschreibung

Die vorliegende Erfindung betrifft eine Scheinwerferanordnung für Fahrzeuge mit einem ersten Gehäusebereich für zumindest eine Hauptlichtquelle und einem zweiten Gehäusebereich für zumindest einen Fahrtrichtungsanzeiger, wobei die beiden Gehäusebereiche von einer im wesentlichen horizontal ausgerichteten Trennwand getrennt sind.

Herkömmlicherweise stellt die Hauptlichtquelle ein Abblend- und Fernlicht bereit. Hierfür können eine oder mehrere Lichtquellen vorgesehen sein, die zusammen mit optischen Elementen, wie Reflektoren und ggf. auch Linsen in einem Gehäuse untergebracht sind. Getrennt davon ist normalerweise ein Fahrtrichtungsanzeiger, auch Blinker genannt, in einem separaten Gehäuse vorgesehen. Optisch sind die Funktionen dieser beiden Lichtfunktionen voneinander getrennt.

Des weiteren ist es bekannt, die Lichtquelle des Fahrtrichtungsanzeigers innerhalb des Gehäuses für die Hauptlichtquelle vorzusehen. In diesem Fall muss die Lichtquelle des Fahrtrichtungsanzeigers von der Lichtemission der Hauptlichtquelle abgeschirmt werden, damit sie bei Betätigung beider Lichtquellen sichtbar bleibt und nicht von der Hauptlichtquelle überstrahlt wird.

Des weiteren ist aus der DE 198 38 224 C2 eine Scheinwerferanordnung bekannt, bei der orangestrahlende LEDs für das Blinklicht am Umfang der Scheinwerfereinheit angeordnet sind.

Aus der DE 199 33 766 A1 ist eine Leuchteneinheit für ein Fahrzeug bekannt, die mehrere Reflektorkammern umfasst, die von einer horizontal ausgerichteten Reflektorkammenivandung getrennt sind.

Schließlich ist aus der DE 42 29 728 C1 ein Kraftfahrzeugscheinwerfer bekannt, der einen Reflektor zur Erzeugung eines Abblendlichts und einen unterhalb von diesem angeordneten Reflektor zur Erzeugung eines Fernlichts aufweist. Die beiden Reflektoren sind von einer Wandung getrennt, die in Lichtaustrittsrichtung hintereinander liegende Durchbrüche aufweist, die sich jeweils in horizontalen Ebenen beidseits der optischen Achsen der Reflektoren erstrecken. Die Durchbrüche weisen Reflektionsflächen auf, so dass Licht von einem Reflektor auf den anderen Reflektor durch die Durchbrüche gelenkt wird.

Es ist die Aufgabe der vorliegenden Erfindung eine Scheinwerferanordnung für Fahrzeuge vorzuschlagen, bei der die Hauptlichtquelle und der Fahrtrichtungsanzeiger in verschiedenen Gehäusebereichen vorgesehen sind, wobei die Sichtbarkeit des Fahrtrichtungsanzeigers verbessert werden soll. Außerdem soll das Erscheinungsbild der Scheinwerferanordnung insgesamt verbessert werden.

Diese Aufgabe wird erfindungsgemäß durch eine Scheinwerferanordnung mit den Merkmalen des Anspruchs 1 gelöst. Vorteilhafte Ausgestaltungen ergeben sich aus den Unteransprüchen.

Die erfindungsgemäße Scheinwerferanordnung ist dadurch gekennzeichnet, dass die Trennwand zumindest z. T. durchscheinend ausgebildet ist, so dass der erste Gehäusebereich durch das Licht einer Lichtquelle für den Fahrtrichtungsanzeiger ausleuchtbar ist, und dass die Trennwand zumindest z. T. als Lichtleiter ausgebildet ist, in die das Licht einer Zusatzlichtquelle einkoppelbar ist.

Vorteilhaft an der erfindungsgemäßen Scheinwerferanordnung ist, dass die Sichtbarkeit des Fahrtrichtungsanzeigers verbessert werden kann, da die Lichtemission nicht nur über den eigentlich für den Fahrtrichtungsanzeiger vorgesehenen zweiten Gehäusebereich erfolgt, sondern auch über den für die Hauptlichtquelle vorgesehenen ersten Gehäusebereich. In diesem ersten Gehäusebereich sind üblicherweise verschiedene optische Elemente, wie Reflektoren, Linsen und verspiegelte Flächen vorgesehen, die bei der erfindungsgemäßen Scheinwerferanordnung auch von der Lichtquelle des Fahrtrichtungsanzeigers angestrahlt werden. Bei Betätigung des Fahrtrichtungsanzeigers erfolgt somit nicht nur eine orangefarbene Lichtemission nach vorne, sondern auch eine indirekte Ausleuchtung des Gehäusebereichs für die Hauptlichtquelle. Neben der verbesserten Sichtbarkeit des Fahrtrichtungsanzeigers wird dadurch das Gesamterscheinungsbild der Scheinwerferanordnung wesentlich von dem Fahrtrichtungsanzeiger geprägt, wodurch der Scheinwerferanordnung ein besonders charakteristisches Design verliehen wird. Dieses Erscheinungsbild offenbart sich vor allem bei Dunkelheit.

Ferner kann bei der erfindungsgemäßen Scheinwerferanordnung eine weitere Lichtfunktion integriert werden. Die Zusatzlichtquelle kann beispielsweise eine Standlichtquelle sein, deren Licht über die Trennwand vertikal nach oben in den ersten Gehäusebereich abgestrahlt wird. Dort beleuchtet das Licht der Standlichtquelle den Gehäuseinnenraum und insbesondere Einrichtungen, wie Tuben, Reflektoren und Linsen für die Hauptlichtquelle. Es werden demnach optische Elemente, welche für die Hauptlichtquelle vorgesehen sind, durch die Zusatzlichtquelle besonders hervorgehoben. Auch dies führt zu einem neuen und vorteilhaften Design der Scheinwerferanordnung. Insbesondere die Nachtanmutung kann bei eingeschalteter Zusatzlichtquelle verbessert werden.

Gemäß einer vorteilhaften Ausgestaltung weist die Trennwand Belüftungsöffnungen auf. Auf diese Weise kann der zweite Gehäusebereich für den Fahrtrichtungsanzeiger sehr klein, insbesondere in vertikaler Richtung sehr schmal, ausgeführt werden. Solche Ausführungen sind herkömmlicherweise nicht möglich, da sie zu einer Überhitzung des Gehäusebereichs für den Fahrtrichtungsanzeiger führen würden. Die Belüftungsöffnungen bewirken einen Luftaustausch zwischen den zwei Gehäusebereichen, so dass der zweite Gehäusebereich über den normalerweise sehr viel größeren ersten Gehäusebereich für die Hauptlichtquelle gekühlt werden kann.

Gemäß einer weiteren Ausgestaltung ist die dem Gehäuseinnenraum des ersten Gehäusebereichs abgewandte Oberfläche der Trennwand partiell lichtundurchlässig und/oder verspiegelt. Durch diese Maßnahme kann einerseits die Abstrahlcharakteristik der Hauptlichtquelle beeinflusst werden und andererseits der Anteil des Lichts des Fahrtrichtungsanzeigers, der in den ersten Gehäusebereich gelangen soll, gesteuert werden.

Gemäß einer weiteren vorteilhaften Ausgestaltung kann die in das Innere des ersten Gehäusebereichs gerichtete Oberfläche der Trennwand gewellt und/oder geriffelt sein. Insbesondere wenn Licht einer Zusatzlichtquelle in die Trennwand eingekoppelt wird, kann gemäß dieser Ausgestaltung eine besonders gute Ausleuchtung des Gehäuseinnenraums des ersten Gehäusebereichs erzielt werden.

Im folgenden wird die Erfindung anhand eines Ausführungsbeispiels mit Bezug zu den Zeichnungen erläutert.

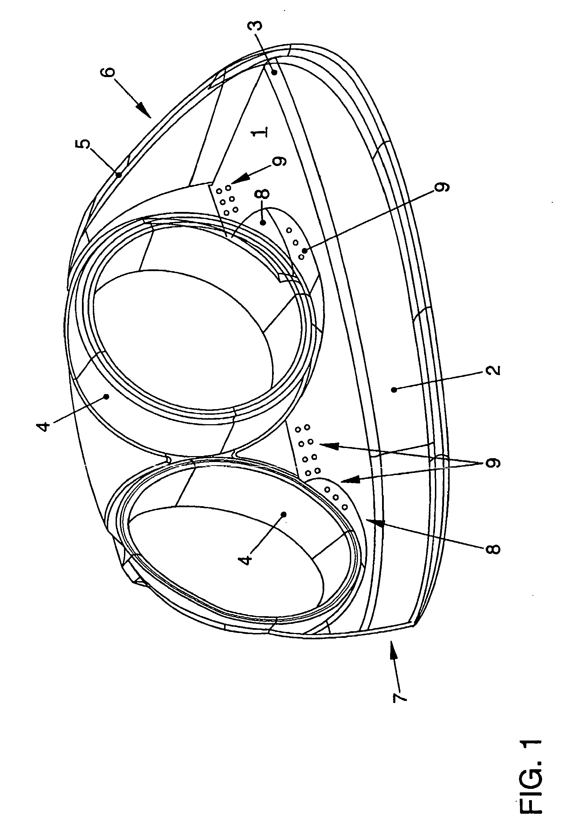

Figur 1 zeigt eine schematische Gesamtansicht der erfindungsgemäßen Scheinwerferanordnung und
Figur 2 zeigt die Trennwand der erfindungsgemäßen Scheinwerferanordnung.

Die Scheinwerferanordnung weist einen ersten Gehäusebereich 6 und einen zweiten Gehäusebereich 7 auf. Der erste Gehäusebereich 6 enthält im vorliegenden Ausführungsbeispiel zwei Hauptlichtquellen für das Fern- und Abblendlicht. Die Hauptlichtquellen sind in zylindrischen Tuben 4 untergebracht, an deren unteren Enden die Hauptlichtquellen jeweils in einem Reflektor angeordnet sind.

Der zweite Gehäusebereich 7 ist für einen Fahrtrichtungsanzeiger ausgebildet. Er bildet im vorliegenden Ausführungsbeispiel von vorne einen schmalen Streifen unterhalb des ersten Gehäusebereichs. In dem zweiten Gehäusebereich 7 sind eine oder mehrere Lichtquellen für den Fahrtrichtungsanzeiger vorgesehen. Die Lichtquellen können von herkömmlichen Glühbirnen, Halogenbirnen oder LEDs gebildet werden. Die Lichtemission des Fahrtrichtungsanzeigers nach außen ist orange. Hierfür kann die Abdeckscheibe 2 des zweiten Gehäusebereichs 7 orange sein. Außerdem können Orangefilter direkt bei den Lichtquellen vorgesehen sein bzw. LEDs können auch direkt oranges Licht emittieren.

Die beiden Gehäusebereiche 6 und 7 können in das Gehäuse 5 der Scheinwerferanordnung eingepasst sein. Dabei werden die beiden Gehäusebereiche 6 und 7 von einer im wesentlichen horizontal ausgerichteten Trennwand 1 getrennt. Des weiteren können die beiden Gehäusebereiche 6 und 7 auch separate Gehäuse aufweisen, welche eine gemeinsame, die Trennwand 1 bildende Gehäusefläche besitzen. Im vorliegenden Ausführungsbeispiel ist der zweite Gehäusebereich 7 für den Fahrtrichtungsanzeiger unterhalb des Gehäusebereichs 6 für die Hauptlichtquelle angeordnet. Der Gehäusebereich 7 für den Fahrtrichtungsanzeiger kann jedoch auch oberhalb des Gehäusebereichs 6 für die Hauptlichtquelle angeordnet sein.

Die Trennwand 1 ist zumindest z. T. durchscheinend ausgebildet, so dass der erste Gehäusebereich 6 durch das Licht der Lichtquelle für den Fahrtrichtungsanzeiger ausgeleuchtet wird, wenn der Fahrtrichtungsanzeiger betätigt wird. Die Trennwand kann z. B. insgesamt teiltransparent sein, d.h. es wird nur ein bestimmter Prozentsatz des auf die Trennwand 1 treffenden Lichts der Lichtquelle des Fahrtrichtungsanzeigers durchgelassen. Ferner können bestimmte Bereiche der Trennwand 1 vollständig durchscheinend sein und andere Bereiche lichtundurchlässig. Des weiteren kann ein Teil der unteren Oberfläche der Trennwand 1 verspiegelt sein.

Für eine bessere Kühlung des zweiten Gehäusebereichs 7 können in der Trennwand 1 Belüftungsöffnungen 9 gebildet sein. Die Zahl und Größe dieser Öffnungen 9 hängt dabei im wesentlichen von dem Volumen des zweiten Gehäusebereichs 7 und der Leistung der Lichtquelle des Fahrtrichtungsanzeigers ab. Die Parameter sind so zu wählen, dass es zu keiner Überhitzung des zweiten Gehäusebereichs 7 kommt.

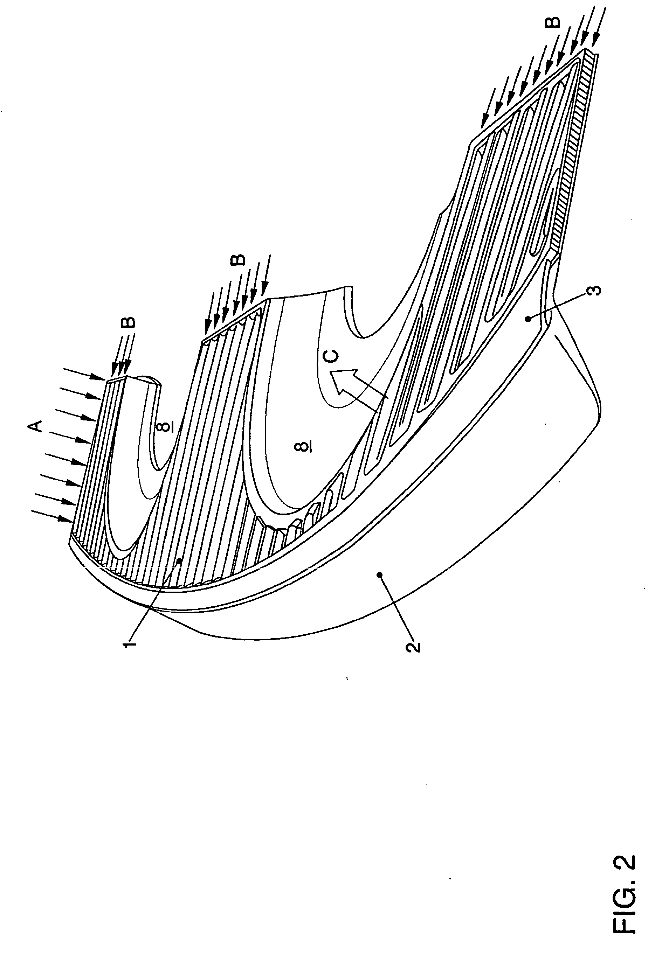

Die Figur 2 zeigt die Ausgestaltung der Trennfläche 1, bei der sie zumindest z. T. als Lichtleiter ausgebildet ist, in den das Licht einer Zusatzlichtquelle, wie z. B. einer Standlichtquelle, eingekoppelt werden kann. Die in Figur 2 sichtbare, den Hauptlichtquellen des ersten Gehäusebereichs 6 zugewandte Oberfläche der Trennwand 1 ist hier geriffelt bzw. gewellt. Über diese Fläche erfolgt die Auskopplung des Lichts der Zusatzlichtquelle in den Gehäuseinnenraum des zweiten Gehäusebereichs. Die in Figur 2 nicht sichtbare untere Oberfläche der Trennwand 1 ist dabei teilweise verchromt oder insgesamt teilverspiegelt, so dass kein oder nur wenig Licht durch diese Oberfläche entweichen kann. Die vordere Stirnfläche der Trennwand 1 ist auch verchromt, so dass das Licht der Zusatzlichtquelle nicht nach vorne, sondern nur vertikal nach oben erfolgt. Die Trennwand 1 kann ein glasklares Kunststoffspritzteil sein. Als Material kann insbesondere Acrylglas verwendet werden.

Die Einkopplung des Lichts der Zusatzlichtquelle in den Lichtleiter der Trennwand 1 erfolgt von der Seite, wie es durch die Pfeile A in Figur 2 angedeutet ist oder von hinten, wie es durch die Pfeile B der Figur 2 gezeigt ist. Die Lichteinkopplung erfolgt somit über die seitlichen Randflächen der Trennwand 1. An den Lichteinkoppelflächen können direkt Zusatzlichtquellen angeordnet sein oder weitere Lichtleiter, welche das Licht der Zusatzlichtquelle an die Trennwand übertragen.

Das Gehäuse 5 schließt nach vorne mit einer an die Fahrzeugkarosserie angepassten Abdeckscheibe ab. Im gezeigten Ausführungsbeispiel ist die Abdeckscheibe 2 für den zweiten Gehäusebereich 7 einstückig mit der Trennwand 1 ausgeführt. Sie steht senkrecht bei der vorderen Kante der Trennwand 1 nach unten weg. In diesem Fall ist für den ersten Gehäusebereich 6 eine separate Abdeckscheibe vorgesehen. Die Abdeckscheibe für den ersten Gehäusebereich 6 ist vorteilhafterweise klar ausgebildet, so dass von außen der Gehäuseinnenraum des zweiten Gehäusebereichs 7 erkennbar ist. Bei Betätigung des Fahrtrichtungsanzeigers ist in diesem Fall die Ausleuchtung des ersten Gehäusebereichs 6 durch die Lichtquelle des Fahrtrichtungsanzeigers durch die Trennwand 1 hindurch besonders gut sichtbar. Die Ausleuchtung kann dabei durch weißes oder oranges Licht erfolgen.

## Patentansprüche

1. Scheinwerferanordnung für Fahrzeuge mit einem ersten Gehäusebereich (6) für zumindest eine Hauptlichtquelle und einem zweiten Gehäusebereich (7) mit zumindest einem Fahrtrichtungsanzeiger, wobei die beiden Gehäusebereiche (6, 7) von einer im wesentlichen horizontal ausgerichteten Trennwand (1) getrennt sind, **dadurch gekennzeichnet,**
- **dass** die Trennwand (1) zumindest zum Teil durchscheinend ausgebildet ist, so dass der erste Gehäusebereich (6) durch das Licht einer Lichtquelle für den Fahrtrichtungsanzeiger ausleuchtbar ist, und
- **dass** die Trennwand (1) zumindest zum Teil als Lichtleiter ausgebildet ist, in die das Licht einer Zusatzlichtquelle einkoppelbar ist.

2. Scheinwerferanordnung gemäß Anspruch 1, **dadurch gekennzeichnet, dass** die Trennwand (1) Belüftungsöffnungen (9) aufweist.

3. Scheinwerferanordnung gemäß Anspruch 1 oder 2, **dadurch gekennzeichnet, dass** die Auskopplung des Lichts aus der Trennwand (1) im wesentlichen vertikal in den Gehäuseinnenraum des ersten Gehäusebereichs (6) erfolgt.

4. Scheinwerferanordnung gemäß einem der vorstehenden Ansprüche, **dadurch gekennzeichnet, dass** die dem Gehäuseinnenraum des ersten Gehäusebereichs (6) abgewandte Oberfläche der Trennwand (1) partiell lichtundurchlässig und/oder verspiegelt ist.

5. Scheinwerferanordnung gemäß einem der vorstehenden Ansprüche, **dadurch gekennzeichnet, dass** die in das Innere des ersten Gehäusebereichs (6) gerichtete Oberfläche der Trennwand (1) gewellt und/oder geriffelt ist.

6. Scheinwerferanordnung gemäß einem der Ansprüche 1 bis 5, **dadurch gekennzeichnet, dass** die Zusatzlichtquelle eine Standlichtquelle ist.

## Claims

1. Headlamp arrangement for vehicles, with a first housing region (6) for at least one main light source and a second housing region (7) with at least one turn indicator, wherein the two housing regions (6, 7) are separated by a partition (1) which is oriented substantially horizontally, **characterized in that**
- the partition (1) is at least partially translucent in design such that the first housing region (6) can be illuminated by the light of a light source for the turn indicator, and
- the partition (1) is at least partially designed as an optical waveguide into which the light of an additional light source can be coupled.

2. Headlamp arrangement according to Claim 1, **characterized in that** the partition (1) has ventilation openings (9).

3. Headlamp arrangement according to Claim 1 or 2, **characterized in that** the light is coupled out from the partition (1) substantially vertically into the housing interior of the first housing region (6).

4. Headlamp arrangement according to one of the preceding claims, **characterized in that** the surface of the partition (1) which faces away from the housing interior of the first housing region (6) is partially opaque and/or reflection-coated.

5. Headlamp arrangement according to one of the preceding claims, **characterized in that** the surface of the partition (1) which is facing the interior of the first housing region (6) is undulated and/or grooved.

6. Headlamp arrangement according to one of Claims 1 to 5, **characterized in that** the additional light source is a parking light source.

## Revendications

1. Arrangement de phare pour véhicules comprenant une première zone de boîtier (6) pour au moins une source de lumière principale et une deuxième zone de boîtier (7) avec au moins un indicateur de changement de direction, les deux zones de boîtier (6, 7) étant séparées par une paroi de séparation (1) s'étendant pour l'essentiel dans le sens horizontal, **caractérisé**
- **en ce que** la paroi de séparation (1) est réalisée au moins partiellement translucide de sorte que la première partie de boîtier (6) puisse être éclairée par la lumière d'une source de lumière pour l'indicateur de changement de direction et
- **en ce que** la paroi de séparation (1) est au moins partiellement réalisée sous la forme d'un conducteur de lumière dans lequel peut être injectée la lumière d'une source de lumière supplémentaire.

2. Arrangement de phare selon la revendication 1, **caractérisé en ce que** la paroi de séparation (1) présente des ouvertures de ventilation (9).

3. Arrangement de phare selon la revendication 1 ou 2, **caractérisé en ce que** l'extraction de la lumière hors de la paroi de séparation (1) s'effectue pour l'essentiel verticalement dans l'espace intérieur, de boîtier de la première zone de boîtier (6).

4. Arrangement de phare selon l'une des revendications précédentes, **caractérisé en ce que** la surface de la paroi de séparation (1) qui est à l'opposé de l'espace intérieur de boîtier de la première zone de boîtier (6) est partiellement opaque à la lumière et/ou réfléchissante.

5. Arrangement de phare selon l'une des revendications précédentes, **caractérisé en ce que** la surface de la paroi de séparation (1) qui est dirigée à l'intérieur de la première zone de boîtier (6) est ondulée et/ou striée.

6. Arrangement de phare selon l'une des revendications 1 à 5, **caractérisé en ce que** la source de lumière supplémentaire est une source de lumière pour feu de position.
